(19) Europäisches Patentamt
European Patent Office
Office européen des brevets

(11) **EP 2 455 778 B1**

(12) **FASCICULE DE BREVET EUROPEEN**

(45) Date de publication et mention
de la délivrance du brevet:
**02.11.2016 Bulletin 2016/44**

(51) Int Cl.:
***G01S 13/53*** *(2006.01)*     ***G01S 13/64*** *(2006.01)*

(21) Numéro de dépôt: **11188335.1**

(22) Date de dépôt: **08.11.2011**

(54) **Procédé d'estimation de la position angulaire d'une cible par détection radar et radar mettant en oeuvre le procédé**

Schätzverfahren der Winkelposition eines Ziels durch Radarerfassung, und Radar, bei dem dieses Verfahren umgesetzt wird

Method for estimating the angular position of a target by radar detection and radar implementing the method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2010 FR 1004559**

(43) Date de publication de la demande:
**23.05.2012 Bulletin 2012/21**

(73) Titulaire: **Thales**
**92400 Courbevoie (FR)**

(72) Inventeurs:
• **Bon, Nicolas**
**29200 BREST (FR)**
• **Quellec, Jean-Michel**
**29810 PLOUMOGUER (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 3 713 154     US-A- 4 034 373**

• **J. C. Curlander and R. N. McDonough: "Synthetic Aperture Radar - Systems and Signal Processing (passage)", 1 January 1991 (1991-01-01), John Wiley and Sons, New York, NY, USA, XP007921734, ISBN: 0-471-85770-X pages 16-21, * page 17, line 4 - line 16 ***

**Description**

La présente invention concerne le domaine des radars et en particulier des radars de surveillance de cibles mobiles eux-mêmes embarqués dans un porteur mobile. L'invention s'applique avantageusement aux radars de surveillance maritime aéroportés.

Un objectif d'un radar de surveillance est la détection et la localisation d'une cible mobile ou non. La détermination de la position d'une cible se fait notamment par l'estimation de sa position angulaire qui est définie par l'angle entre un axe de référence et l'axe reliant le radar, ou son porteur, à la cible. Par exemple, lorsque l'axe de référence pointe vers le nord géographique, la position angulaire de la cible est définie par l'angle d'azimut. Lorsque l'axe de référence est l'axe du porteur, la position angulaire de la cible est définie par l'angle de gisement.

Le principe général d'un radar de surveillance consiste à émettre une série d'impulsions par le biais d'une antenne pivotante qui balaie l'espace angulaire pour détecter la présence d'une cible potentielle. Si une cible est effectivement présente dans le faisceau de l'antenne, les impulsions de signal sont réfléchies sur cette cible et renvoient des échos vers le radar qui comporte des moyens de réception adaptés. Des moyens de traitement et d'analyse des échos reçus sont mis en oeuvre dans le but d'en déduire des informations sur la localisation de la cible, notamment sa position angulaire, sa distance par rapport au radar ou encore sa vitesse.

On connaît notamment trois méthodes d'analyse du signal reçu pour déterminer la position angulaire d'une cible à l'aide d'un radar.

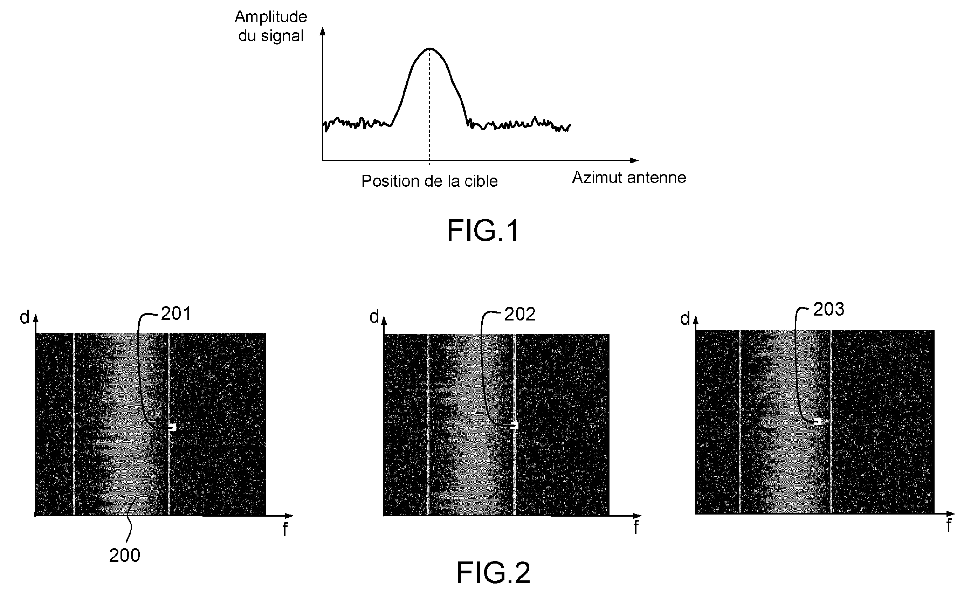

Une première méthode connue utilise un radar monovoie qui réalise une analyse de l'amplitude (ou de la puissance) du signal reçu au cours du balayage de l'antenne. L'amplitude du signal reçu par le radar varie en fonction de l'azimut de l'antenne en suivant l'allure du diagramme d'antenne. L'azimut de la cible détectée est obtenu en recherchant le maximum de l'amplitude. Ce principe est illustré à la figure 1.

Les performances de cette méthode, et en particulier la précision de l'estimation de l'azimut de la cible, dépendent fortement du rapport signal-à-bruit à la réception. Plus ce rapport est faible, plus la cible est difficilement détectable car le bruit peut engendrer des pics d'amplitude parasites.

Une autre méthode connue consiste à effectuer une analyse des signaux reçus dans le domaine fréquentiel. Ce type de méthode est mis en oeuvre par des radars monovoie dits en « mode Doppler ». Dans de tels cas, le radar émet une série d'impulsions à différents instants successifs. Les échos reçus après réflexion sur la cible sont regroupés par blocs, un bloc comportant plusieurs impulsions. Pour chaque impulsion reçue, l'azimut, ou le gisement, de l'antenne est connu du radar, on définit alors un azimut moyen pour un bloc d'impulsions. Par une analyse dans le domaine fréquentiel des impulsions d'un bloc, notamment par le biais d'une transformée de Fourier appliquée à ce bloc, il est possible de détecter la présence de la cible par le niveau de l'amplitude des échos reçus par le radar. A chaque bloc est associé un azimut moyen de la direction de pointage de l'antenne. La localisation angulaire de la cible consiste alors à attribuer, comme estimée de l'azimut de la cible, l'azimut moyen du bloc pour lequel une cible est détectée. La cible peut être détectée sur plusieurs blocs consécutifs, une méthode de goniométrie peut alors être utilisée afin de moyenner l'azimut des blocs en les pondérant par l'amplitude du signal reçu.

Ce type de méthode présente l'inconvénient de limiter la résolution de détection azimutale à la résolution angulaire séparant l'azimut moyen de deux blocs et donc indirectement à la taille d'un bloc. Cet inconvénient impacte les performances de la détection sur la précision de l'estimée de la position angulaire de la cible. Il est possible de remédier à cet inconvénient en réalisant un recouvrement azimutal entre deux ou plusieurs blocs consécutifs, cependant plus le taux de recouvrement est important, plus la complexité de calcul est augmentée ce qui impacte le coût de mise en oeuvre.

Une troisième méthode connue consiste à utiliser un radar comportant au moins deux voies de réception. Ces deux voies sont communément désignées par les termes voie somme et voie delta, et l'azimut de la cible est obtenu en calculant l'écartométrie, par exemple prise égale au produit scalaire des signaux issus de chacune des deux voies. La valeur de l'écartométrie permet d'en déduire l'écart qu'il y a entre la position angulaire de l'antenne et la position réelle de la cible.

Cette troisième méthode présente l'avantage d'augmenter considérablement la précision de localisation angulaire par rapport à la deuxième méthode précitée, cependant elle nécessite l'utilisation d'un radar à deux voies de réception, facteur d'augmentation du coût des équipements.

On connait par ailleurs d'autres méthodes et dispositifs de détection radar décrites par exemples dans les documents US4034373, US3713154 et dans le document « Synthetic Aperture Radar - Systems and Signal processing », J.C.Curlander and R.N. McDonougy, 1er janvier 1991, John Wiley and Sons, New York, NY, USA.

L'invention vise à remédier aux limitations précitées des méthodes connues en proposant un procédé de détermination de la position angulaire d'une cible qui améliore sensiblement la précision et en particulier la variance des estimations réalisées. L'invention ne nécessite d'utiliser qu'une voie de réception et permet en outre de déterminer la vitesse radiale de la cible.

L'invention a, comme principaux avantages, une amélioration de la précision d'extraction angulaire ainsi qu'une réduction des fluctuations sur l'azimut extrait.

A cet effet, l'invention a pour objet un procédé d'estimation de la position angulaire $\theta_c$ d'une cible détectée par un radar embarqué sur un porteur mobile, ledit radar émettant, par l'intermédiaire d'une antenne orientable, un signal, sous forme d'impulsions, en direction de la cible et recevant des échos issus de la réflexion dudit signal sur la cible, ledit procédé étant caractérisé en ce qu'il comporte au moins les étapes suivantes :

o une étape d'estimation, pour chaque impulsion ou groupe d'impulsions d'indice temporel i, de la position angulaire $\theta(i)$ de l'antenne,

o une étape d'estimation, pour chaque impulsion ou groupe d'impulsions d'indice temporel i, de la fréquence Doppler $f_D(i)$ du ou des échos reçus,

o une étape d'appariement, pour chaque impulsion ou groupe d'impulsions d'indice temporel i, de la position angulaire $\theta(i)$ et de la fréquence Doppler $f_D(i)$,

o une étape d'estimation de la position angulaire $\theta_c$ au moins par résolution de l'équation

$$\frac{\lambda f_D(i)}{2} = V_a \sin \theta(i)(\theta_c - \theta(i)) + V_{r,c}$$, où $\lambda$ est la longueur d'onde du radar, $V_a$ est la norme de la vitesse du porteur et $V_{r,c}$ est la vitesse radiale de la cible.

Dans un mode particulier de réalisation de l'invention, l'équation $\frac{\lambda f_D(i)}{2} = V_a \sin \theta(i)(\theta_c - \theta(i)) + V_{r,c}$ est résolue par la minimisation de l'erreur quadratique moyenne

$$E(\theta_c, V_{r,c}) = \sum_{i=1}^{N} \left( V_a \sin \theta(i)(\theta_c - \theta(i)) + V_{r,c} - \frac{\lambda f_D(i)}{2} \right)^2$$ , où N est le nombre d'impulsions ou de groupes d'impulsions, la position angulaire $\theta_c$ et la vitesse radiale $V_{r,c}$ de la cible étant supposées constantes sur l'horizon N.

Dans un autre mode particulier de réalisation de l'invention, la vitesse radiale de la cible $V_{r,c}$ est fixée à une valeur donnée à priori $V_{r,c}^{apriori}$ et la position angulaire $\theta_c(i)$ de la cible est prise égale à $\theta_c(i) = \theta(i) + \dfrac{\lambda f_D(i) - V_{r,c}^{apriori}}{2V_a \sin \theta(i)}$

pour chaque impulsion ou groupe d'impulsions d'indice temporel i.

Dans une variante de réalisation de l'invention, la position angulaire $\theta_c(i)$ de la cible est corrigée d'un biais de

mesure $\delta\theta = \dfrac{\Delta V_{r,c}}{V_a \sin \theta}$ , où $\Delta V_{r,c}$ est le décalage entre la valeur a priori $V_{r,c}^{apriori}$ de la vitesse radiale de la cible et sa valeur réelle.

Dans une variante de réalisation de l'invention, le biais de mesure $\delta\theta$ est déterminé à partir de la différence entre les valeurs moyennes des positions angulaires de l'antenne et les valeurs moyennes des positions angulaires de la cible.

Dans une variante de réalisation de l'invention, le biais de mesure $\delta\theta$ est déterminé à partir d'une valeur de la vitesse radiale de la cible fournie par des moyens de pistage de la cible.

Dans une variante de réalisation de l'invention, les positions angulaires sont des angles de gisement ou d'azimut.

Dans une variante de réalisation de l'invention, le porteur est un aéronef.

Dans une variante de réalisation de l'invention, la vitesse radiale du porteur est estimée par une centrale inertielle embarquée sur le porteur.

L'invention a également pour objet un radar de surveillance comportant au moins une antenne orientable, des moyens d'émission d'un signal radar sous forme d'impulsions, des moyens de réception des échos engendrés par la réflexion desdites impulsions sur l'environnement, des moyens d'estimation de la position angulaire de l'antenne, des moyens d'estimation de la fréquence Doppler du ou des échos reçus, des moyens d'appariement de la position angulaire de l'antenne et de la fréquence Doppler, ledit radar étant adapté en outre à mettre en oeuvre les étapes du procédé selon l'invention.

D'autres caractéristiques et avantages de l'invention apparaîtront à la lecture de la description, donnée à titre d'exemple, faite en regard des dessins annexés qui représentent :

- la figure 1, un diagramme de l'amplitude du signal reçu par un radar monovoie en mode non Doppler selon l'état de l'art,
- la figure 2, trois diagrammes distance-fréquence illustrant le principe de détection d'une cible par analyse fréquentielle pour un radar en mode Doppler,

- la figure 3, un schéma illustrant le positionnement angulaire d'une cible par rapport à un aéronef sur lequel est embarqué un radar selon l'invention,
- la figure 4, un diagramme de la position angulaire de la cible en fonction de sa vitesse radiale obtenu selon un mode de réalisation de l'invention,
- la figure 5, un diagramme de la position angulaire de la cible en fonction du nombre de tour d'antenne obtenu selon un autre mode de réalisation de l'invention,
- la figure 6, un synoptique d'un radar de surveillance mettant en oeuvre le procédé selon l'invention.

La figure 2 illustre le principe d'analyse fréquentielle réalisé par un radar de surveillance connu de l'art antérieur pour détecter une cible et estimer sa position angulaire.

Chacun des trois diagrammes de la figure 2 représente, pour une direction de pointage de l'antenne du radar donnée, l'évolution, en abscisse, de la fréquence Doppler en fonction, en ordonnée, de la distance de la cible potentielle. Les diagrammes sont obtenus à partir d'enregistrements de données réelles. La fréquence Doppler s'entend ici de la fréquence de l'écho reçu par le radar issu de la réflexion du signal radar sur la cible. Les trois figures correspondent, de gauche à droite, à trois directions de pointage successives de l'antenne lors d'un balayage dans le sens des aiguilles d'une montre. La fréquence Doppler est, dans chaque cas, corrigée de la fréquence Doppler moyenne correspondant à la vitesse radiale du porteur du radar. Sur les trois diagrammes de la figure 2, on observe ainsi que la fréquence Doppler 200 des échos reçus de l'environnement hors cible (communément désigné par le terme anglo-saxon « clutter ») reste fixe sur un secteur azimutal limité. En effet, une fois la fréquence Doppler moyenne due à la vitesse radiale du porteur compensée, le spectre du signal reçu par le radar présente des caractéristiques similaires sur le secteur angulaire d'observation quelle que soit la direction de pointage de l'antenne. La position et la largeur du spectre du clutter peuvent toutefois varier avec par exemple la direction du vent. Par contre, on remarque que la cible, identifiée par ses coordonnées 201, 202, 203 distance/fréquence Doppler, présente une fréquence Doppler qui évolue relativement à celle du porteur du radar au cours du passage du lobe d'antenne. Dans une méthode d'extraction angulaire classique, telle qu'explicitée précédemment, la position angulaire de la cible est retenue comme égale à la direction angulaire de pointage de l'antenne radar associée au diagramme distance/fréquence pour lequel une cible a été détectée. Un inconvénient de cette méthode est le manque de précision de l'extraction angulaire qui est limitée par la fréquence des mesures effectuées par le radar au cours du balayage angulaire de l'antenne.

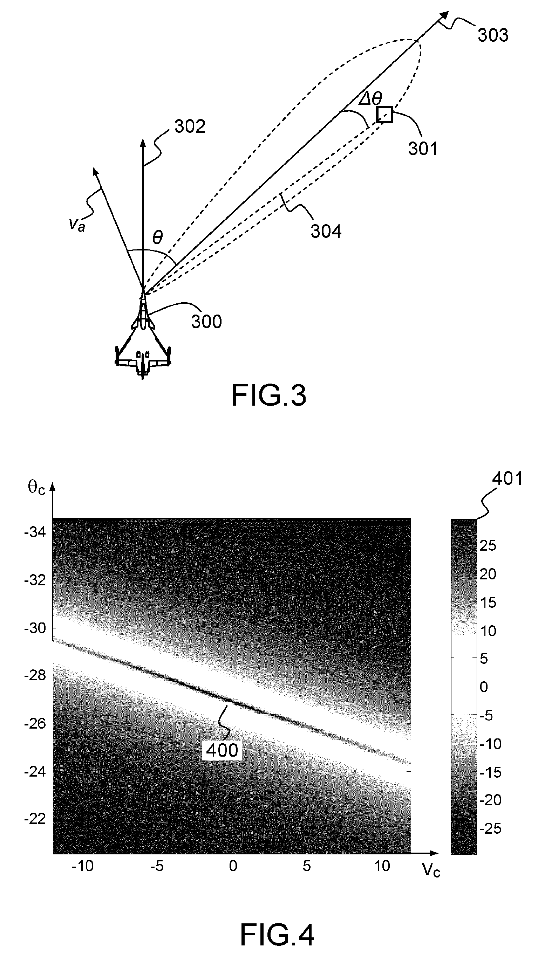

La figure 3 schématise le positionnement angulaire d'une cible 301 par rapport à un aéronef 300 sur lequel est embarqué un radar selon l'invention.

L'aéronef 300 présente une vitesse $\vec{V}_a$, de norme $V_a$, dont la direction peut être différente de l'axe 302 de déplacement de l'aéronef. L'antenne du radar (non représenté) embarqué sur l'aéronef présente, à un instant donné, une direction de pointage 303 qui forme un écart angulaire $\Delta\theta$ avec l'axe 304 reliant l'aéronef 300 et la cible 301. La cible 301 est mobile et présente elle-même une vitesse $\vec{V}_c$ de norme $V_c$. On désigne par $V_{r,a}$ et $V_{r,c}$ les vitesses radiales respectives de l'aéronef et de la cible qui correspondent à leurs projections sur la ligne de visée du radar.

La vitesse radiale relative $V_r$ de l'onde reçue et mesurée par le radar dans la direction de pointage de l'antenne est liée à la fréquence Doppler $f_D$ par la relation suivante :

$$V_r = \lambda f_D / 2 \ (1)$$

avec $\lambda$ la longueur d'onde du signal émis par le radar.

La vitesse radiale $V_r$ correspond à la somme de trois termes, la vitesse radiale $V_{r,a}$ de l'aéronef, la vitesse radiale $V_{r,c}$ de la cible et une composante $\Delta V_r$ qui résulte de l'écart angulaire $\Delta\theta$ entre la direction de pointage de l'antenne et la direction de la cible. La vitesse radiale totale $V_r$ s'exprime donc à l'aide de la relation suivante :

$$V_r = V_{r,a} + \Delta V_r + V_{r,c} \ (2)$$

La vitesse radiale $V_{r,a}$ de l'aéronef peut être estimée par des moyens extérieurs à l'invention, par exemple par une centrale inertielle embarquée à bord de l'appareil. Elle peut ainsi être compensée par des traitements adaptés de telle sorte que la vitesse radiale mesurée par le radar devient :

$$V_r = \Delta V_r + V_{r,c} \ (3)$$

La composante $\Delta V_r$ s'exprime en fonction de l'écart angulaire $\Delta\theta$ et de la vitesse du porteur par la relation suivante, en prenant comme hypothèse vraisemblable que l'écart angulaire $\Delta\theta$ est faible :

$$\Delta V_r = V_a \sin\theta\Delta\theta \quad (4)$$

$\Delta V_r$, qui traduit le décalage en vitesse radiale induit par l'écart angulaire entre la ligne de visée et la direction de la cible, est obtenu en dérivant l'expression de la vitesse radiale $V_{r,a} = V_a \cos\theta$ du porteur par rapport à l'angle de gisement.

On obtient en combinant les relations (1), (3) et (4) l'égalité suivante :

$$\frac{\lambda f_D}{2} = V_a \sin\theta\Delta\theta + V_{r,c} \quad (5)$$

L'égalité (5) est une équation à deux inconnues, l'écart angulaire $\Delta\theta$, qui donne indirectement la position angulaire de la cible en azimut ou en gisement et la vitesse radiale $V_{r,c}$ de la cible. La longueur d'onde $\lambda$ du radar et la vitesse de l'aéronef sont des données connues a priori. L'angle $\theta$, qui correspond au gisement de l'antenne du radar, est également connu et la fréquence Doppler $f_D$ des échos reçus par le radar est mesurée pour chaque valeur de l'angle $\theta$ au cours du balayage de l'antenne.

Dans un premier mode particulier de réalisation de l'invention, si la cible à détecter est fixe, sa vitesse radiale $V_{r,c}$ est nulle et l'écart angulaire $\Delta\theta$ peut être estimé à partir de la relation suivante $\Delta\theta = \dfrac{\lambda f_D}{2V_a \sin\theta}$, pour chaque couple de valeurs ($f_D$, $\theta$) issue d'une détection déterminée par le radar. Le gisement précis de la cible est ensuite obtenu en additionnant à l'écart angulaire $\Delta\theta$ l'angle de gisement $\theta$ de l'antenne. Les valeurs de gisement de la cible obtenues peuvent être moyennées pour en déduire une position angulaire précise de la cible.

Dans un autre mode de réalisation de l'invention, pour lequel la vitesse radiale de la cible n'est pas nulle, l'équation (5) comporte alors deux inconnues. Si un nombre suffisant de mesures de la fréquence Doppler réalisées par le radar est disponible dans un intervalle de temps suffisamment court, la vitesse radiale de la cible est supposée constante sur cet intervalle. Dans un tel cas, un algorithme d'optimisation est utilisé pour déterminer les valeurs des inconnues $\Delta\theta$ et $V_{r,c}$ à partir des mesures de la fréquence Doppler pour différents angles de gisement $\theta$ de l'antenne radar.

Le procédé selon l'invention consiste alors, par exemple, à déterminer le couple de valeurs $(\hat{\theta}_c, \hat{V}_{r,c})$ qui minimise l'erreur quadratique moyenne entre les deux membres de l'équation (5). L'erreur quadratique moyenne se calcule de la façon suivante :

$$E(\theta_c, V_{r,c}) = \sum_{i=1}^{N}\left(V_a \sin\theta(i)\left(\theta_c - \theta(i)\right) + V_{r,c} - V_r(i)\right)^2 \quad (6)$$

avec N le nombre de mesures réalisées d'une part de la vitesse radiale $V_r(i)$ et d'autre part du gisement de l'antenne radar $\theta(i)$. La vitesse radiale $V_r(i)$ est mesurée à partir de la fréquence Doppler $f_D(i)$ de l'écho reçu, $V_r(i) = \dfrac{\lambda f_D(i)}{2}$.

$0_c = 0(i) + \Delta0$ est l'angle de gisement de la cible que l'on souhaite déterminer.

On remarque qu'en plus de la position angulaire de la cible, le procédé selon l'invention permet également de déterminer une estimée de la vitesse radiale de la cible. De plus, le procédé n'est applicable que lorsque l'axe 303 de pointage de l'antenne n'est pas colinéaire à l'axe 302 du porteur car dans le cas contraire, l'angle $\theta$ devient nul et la minimisation de l'erreur quadratique selon la relation (6) n'est plus possible.

La figure 4 représente un exemple de graphique de l'erreur quadratique moyenne selon la relation (6) en fonction de la vitesse radiale de la cible $V_{r,c}$ en abscisse et de l'angle de gisement $\theta_c$ de la cible en ordonnée. L'amplitude de l'erreur est donnée en décibels sur l'échelle 401 et est déterminée à partir de mesures réelles. Trois mesures ont été réalisées avec une précision de 0,15m/s pour la vitesse radiale $V_r$ grâce à une mesure de la fréquence Doppler sur 160 récurrences radar avec une fréquence de récurrence de 1650Hz et une émission radar en bande X. La cible considérée est une bouée d'une surface de 5m². Les mesures du gisement de l'antenne radar sont espacées temporellement de 50ms et sont réalisées pendant le passage du lobe d'antenne sur la cible avec une rotation de 6 tours par minute. Les trois jeux de mesures sont indiqués dans le tableau suivant.

| $\theta$ (degrés) | -28,69 | -27,91 | -26,15 |
|---|---|---|---|
| $V_r$ (m/s) | 0,39 | 0,86 | 1,95 |

Le point 400 de coordonnées $\hat{\theta}_c$=-27,1° et $\hat{V}_{r,c}$=-0,8m/s est le point qui minimise la fonction erreur quadratique moyenne.

Sans sortir du cadre de l'invention, d'autres méthodes de résolution de l'équation (5) peuvent être envisagées par exemple des méthodes des moindres carrés.

Dans certains cas, la vitesse radiale de la cible ne peut être considérée constante sur toute la durée des mesures effectuées par le radar. C'est le cas, par exemple, lorsque les mesures de la vitesse radiale $V_r$ sont trop espacées dans le temps ou que la cible est soumise à des fluctuations significatives de sa vitesse. Dans ces conditions, le procédé selon le mode de réalisation de l'invention, décrit ci-dessus, ne peut s'appliquer car il requiert une vitesse radiale constante pendant la durée des mesures effectuées.

Dans une autre variante de réalisation de l'invention l'angle de gisement de la cible est déterminé en fixant, a priori, la valeur de la vitesse radiale de la cible à une valeur donnée, par exemple nulle. L'équation (5) ne comporte alors plus qu'une seule inconnue et l'angle de gisement est estimé à l'aide de la relation suivante

$$\theta_c(i) = \theta(i) + \Delta\theta = \theta(i) + \frac{\lambda f_D(i) - V_{r,c}^{apriori}}{2V_a \sin\theta(i)}$$ pour chaque mesure i variant de 1 à N.

La valeur de l'angle de gisement $\theta_c$ est entachée d'un biais $\delta\theta = \dfrac{\Delta V_{r,c}}{V_a \sin\theta}$, où $\Delta V_{r,c} = V_{r,c} - V_{r,c}^{apriori}$ est le décalage entre la valeur donnée, a priori, à la vitesse radiale de la cible et sa valeur réelle. Cependant, un avantage du procédé selon l'invention réside dans la correction angulaire $\Delta\theta$ qui permet de diminuer la variance sur les mesures de l'angle de gisement $\theta_c$.

Le biais $\delta\theta(i)$ résultant de la méconnaissance de la vitesse radiale de la cible peut être compensé en calculant la différence des valeurs moyennes des mesures du gisement de l'antenne $\theta(i)$ et des mesures du gisement de la cible $\theta_c(i)$ et en l'ajoutant aux mesures de l'angle de gisement $\theta_c(i)$ obtenues, la moyenne étant préférablement calculée sur un horizon temporel court. La variante de réalisation de l'invention précitée est applicable dans le cas où la vitesse radiale de la cible n'est pas constante sur l'horizon temporel des mesures réalisées par le radar. Elle comporte également un intérêt dans les cas où il est souhaitable de limiter la complexité des traitements et où la précision souhaitée porte uniquement sur la variance de l'estimée $\theta_c$ et non sur sa valeur absolue.

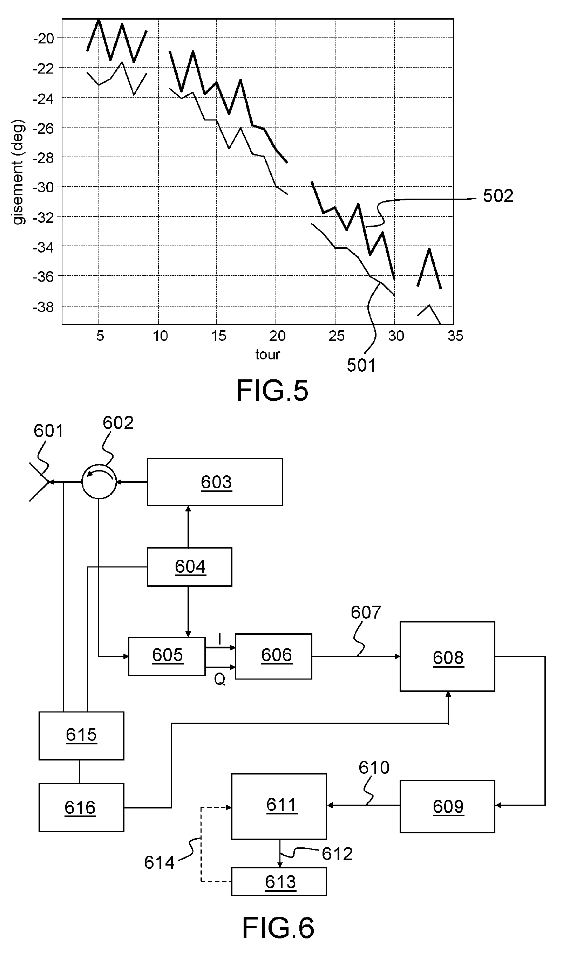

La figure 5 illustre l'évolution, sur un diagramme, de l'angle de gisement 501 de la cible obtenu avec la méthode selon l'invention dans le mode de réalisation précédemment décrit en comparaison avec celle de l'angle de gisement 502 de l'antenne. Les mesures ont été réalisées sur des données réelles et sur un ensemble de 35 tours d'antenne. Pour certaines valeurs de tour d'antenne, aucune valeur angulaire n'est extraite car la cible n'a pas été détectée. Il est intéressant de remarquer que la courbe de variation de l'angle de gisement 501 obtenue à l'aide du procédé selon l'invention présente un écart type plus faible que la courbe 502 obtenue directement par l'exploitation des angles de gisement de l'antenne radar. Les deux courbes 501, 502 sont sensiblement parallèles entre elles et espacées d'un écart angulaire qui correspond au biais de mesure précité.

La figure 6 représente un synoptique d'un radar de surveillance 600 adapté à mettre en oeuvre le procédé selon l'invention. Il comporte une antenne radar 601 orientable et adaptée à émettre et recevoir des signaux radars, notamment sous la forme d'impulsions et un circulateur 602 adapté à router les signaux émis ou reçus entre l'antenne 601 et les fonctions émettrice 603 et réceptrice 605 du radar 600. L'antenne radar 601 peut être une antenne à balayage mécanique ou à balayage électronique dont le faisceau est orientable. La fonction émission 603 du radar produit un signal radar, par exemple sous la forme de blocs de données comportant N impulsions. La fonction réception 605 du radar réalise une réception cohérente des échos reçus par l'antenne 601 provenant de la réflexion du signal radar sur l'environnement situé dans le faisceau de l'antenne et en particulier sur les cibles potentielles à détecter dans cet environnement. Un dispositif 604 de pilotage et de séquencement des fonctionnalités est inséré entre les fonctions émission 603 et réception 605. Le signal de sortie des moyens de réception 605 est fourni, sous forme d'une voie I en phase et d'une voie Q en quadrature, en entrée d'un module 606 de traitement de signal cohérent qui réalise, notamment, une transformée de Fourier sur le signal afin de pouvoir effectuer une analyse dans le domaine fréquentiel. Le module 606 produit à sa sortie, pour chaque bloc de signal, un tableau 607 d'amplitude du signal en fonction, d'une part de la distance entre la cible et l'antenne 601, et d'autre part de la fréquence Doppler. Les tableaux 607 sont du type de ceux représentés à la figure 2 avec un échantillonnage en distance et en fréquence. Le radar de surveillance 600 comporte également un module 615 permettant d'associer à chaque impulsion de signal émise le gisement de l'antenne à l'instant de son émission. Un module 616 de traitement établi ensuite un angle de gisement moyen θ associé à un bloc d'impulsions, cet angle étant transmis à un module 608 qui met en relation, par appariement, l'angle de gisement d'antenne moyen θ avec chaque tableau 607 distance/fréquence Doppler. Le radar 600 comporte également une fonction 609 de seuillage et d'élaboration de plots. Un plot est un terme communément utilisé dans le domaine des radars pour désigner une case distance/fréquence d'un tableau 607 pour lequel une cible a été détectée car l'amplitude du signal pour cette case dépasse un seuil de détection prédéterminé. Un plot 610 est ainsi défini, notamment, par l'angle de gisement de l'antenne, la distance de la cible et sa fréquence Doppler ou sa vitesse radiale qui peut être déduite à partir de la fréquence Doppler.

Le radar 600 selon l'invention comporte en outre un module 611 d'estimation du gisement, ou plus généralement de la position angulaire, de la ou des cibles détectées à l'aide du procédé selon l'invention tel que décrit précédemment dans ses différents modes de réalisation. Le module 611 produit en sortie une estimée 612 $θ_c$ de la position angulaire de la cible accompagnée éventuellement du biais de mesure estimé lorsque la vitesse radiale de la cible a été fixée à une valeur a priori.

Dans un mode de réalisation particulier de l'invention, ces estimations 612 sont fournies à un module 613 de pistage qui utilise la position angulaire estimée de la cible, à différents instants successifs, pour réaliser un suivi du déplacement de cette cible. Un module 613 de pistage utilise, par exemple, un filtrage de Kalman alimenté par les estimées de position angulaire pour réaliser le suivi du déplacement de la cible.

Dans un autre mode de réalisation de l'invention, le module 613 de pistage peut fournir une estimée 614 de la vitesse radiale de la cible qui peut servir à corriger le biais de mesure $δθ$.

## Revendications

1. Procédé d'estimation de la position angulaire $θ_c$ d'une cible (301) détectée par un radar (600) embarqué sur un porteur (300) mobile, ledit radar émettant, par l'intermédiaire d'une antenne orientable (601), un signal, sous forme d'impulsions, en direction de la cible (301) et recevant des échos issus de la réflexion dudit signal sur la cible (301), ledit procédé comportant les étapes suivantes :

   o une étape d'estimation (615, 616), pour chaque impulsion ou groupe d'impulsions d'indice temporel i, pris dans un ensemble comprenant une pluralité d'impulsions émises, de la position angulaire $θ(i)$ de l'antenne (601),
   o une étape d'estimation (606), pour chaque impulsion ou groupe d'impulsions d'indice temporel i, pris dans ledit ensemble comprenant une pluralité d'impulsions émises, de la fréquence Doppler $f_D(i)$ du ou des échos issus de la réflexion de ladite impulsion ou dudit groupe d'impulsions sur la cible (301),
   o une étape d'appariement (608), pour chaque impulsion ou groupe d'impulsions d'indice temporel i, pris dans ledit ensemble comprenant une pluralité d'impulsions émises, de la position angulaire $θ(i)$ et de la fréquence Doppler $f_D(i)$
   o une étape d'estimation (611) de la position angulaire $θ_c$ de la cible au moins par résolution de l'équation

   $$\frac{\lambda f_D(i)}{2} = V_a \sin θ(i)(θ_c - θ(i)) + V_{r,c}$$, où $λ$ est la longueur d'onde du radar, $V_a$ est la norme de la vitesse du porteur (300) et $V_{r,c}$ est la vitesse radiale de la cible (301).

2. Procédé selon la revendication 1 **caractérisé en ce que** l'équation $\frac{\lambda f_D(i)}{2} = V_a \sin θ(i)(θ_c - θ(i)) + V_{r,c}$ est résolue par la minimisation de l'erreur quadratique moyenne

   $$E(θ_c, V_{r,c}) = \sum_{i=1}^{N} \left( V_a \sin θ(i)(θ_c - θ(i)) + V_{r,c} - \frac{\lambda f_D(i)}{2} \right)^2$$, où N est le nombre d'impulsions ou de groupes d'impulsions, la position angulaire $θ_c$ et la vitesse radiale $V_{r,c}$ de la cible étant supposées constantes sur l'horizon N.

3. Procédé selon la revendication 1 **caractérisé en ce que** la vitesse radiale de la cible $V_{r,c}$ est fixée à une valeur donnée a priori $V_{r,c}^{apriori}$ et que la position angulaire $θ_c(i)$ de la cible est prise égale à

   $$θ_c(i) = θ(i) + \frac{\lambda f_D(i) - V_{r,c}^{apriori}}{2 V_a \sin θ(i)}$$ pour chaque impulsion ou groupe d'impulsions d'indice temporel i.

4. Procédé selon la revendication 3 **caractérisé en ce que** la position angulaire $θ_c(i)$ de la cible est corrigée d'un biais

de mesure $\delta\theta = \dfrac{\Delta V_{r,c}}{V_a \sin\theta}$, où $\Delta V_{r,c}$ est le décalage entre la valeur à priori $V_{r,c}{}^{apriori}$ de la vitesse radiale de la cible et sa valeur réelle.

5. Procédé selon la revendication 4 **caractérisé en ce que** le biais de mesure $\delta\theta$ est déterminé à partir de la différence entre les valeurs moyennes des positions angulaires de l'antenne et les valeurs moyennes des positions angulaires de la cible.

6. Procédé selon la revendication 4 **caractérisé en ce que** le biais de mesure $\delta\theta$ est déterminé à partir d'une valeur de la vitesse radiale de la cible fournie (614) par des moyens de pistage (613) de la cible.

7. Procédé selon l'une des revendications précédentes **caractérisé en ce que** les positions angulaires sont des angles de gisement ou d'azimut.

8. Procédé selon l'une des revendications précédentes **caractérisé en ce que** le porteur (300) est un aéronef.

9. Procédé selon l'une des revendications précédentes **caractérisé en ce que** la vitesse radiale du porteur (300) est estimée par une centrale inertielle embarquée sur le porteur.

10. Radar de surveillance (600) comportant au moins une antenne (601) orientable, des moyens d'émission (603) d'un signal radar sous forme d'impulsions, des moyens de réception (604) des échos engendrés par la réflexion desdites impulsions sur l'environnement, des moyens (615,616) d'estimation de la position angulaire de l'antenne, des moyens (606) d'estimation de la fréquence Doppler du ou des échos reçus, des moyens (608) d'appariement de la position angulaire de l'antenne et de la fréquence Doppler, ledit radar étant adapté en outre à mettre en oeuvre les étapes du procédé selon l'une quelconque des revendications 1 à 9.

**Patentansprüche**

1. Verfahren zum Schätzen der Winkelposition $\theta_c$ eines Ziels (301), das von einem Radar (600) an Bord eines mobilen Trägers (300) detektiert wird, wobei das Radar mittels einer steuerbaren Antenne (601) ein Signal in Form von Impulsen in Richtung des Ziels (301) emittiert und Echos aufgrund der Reflexion des Signals an dem Ziel (301) empfängt, wobei das Verfahren die folgenden Schritte beinhaltet:

   o einen Schritt (615, 616) des Schätzens der Winkelposition $\theta(i)$ der Antenne (601) für jeden Impuls oder jede Gruppe von Impulsen mit einem Zeitindex i, aufgenommen in einem Satz, der mehrere emittierte Impulse umfasst;
   o einen Schritt (606) des Schätzens der Doppler-Frequenz $f_D(i)$ der ein oder mehreren Echos aufgrund der von der Reflexion des Impulses oder der Gruppe von Impulsen an dem Ziel (301) für jeden Impuls oder jede Gruppe von Impulsen mit einem Zeitindex i, aufgenommen in dem Satz, der mehrere emittierte Impulse umfasst;
   o einen Schritt (608) des Paarens der Winkelposition $\theta(i)$ und der Doppler-Frequenz $f_D(i)$ für jeden Impuls oder jede Gruppe von Impulsen mit einem Zeitindex i, aufgenommen in dem Satz, der mehrere emittierte Impulse umfasst;
   o einen Schritt (611) des Schätzens der Winkelposition $\theta_c$ des Ziels wenigstens durch Lösen der folgenden Gleichung: $\dfrac{\lambda f_D(i)}{2} = V_a \sin\theta(i)(\theta_c - \theta(i)) + V_{r,c}$, wobei $\lambda$ die Wellenlänge des Radars ist, $V_a$ die Norm der Geschwindigkeit des Trägers (300) ist und $V_{r,c}$ die Radialgeschwindigkeit des Ziels (301) ist.

2. Verfahren nach Anspruch 1, **dadurch gekennzeichnet, dass** die Gleichung $\dfrac{\lambda f_D(i)}{2} = V_a \sin\theta(i)(\theta_c - \theta(i)) + V_{r,c}$ durch Minimieren des mittleren quadratischen Fehlers

$$E(\theta_c, V_{r,c}) = \sum_{i=1}^{N} \left( V_a \sin\theta(i)(\theta_c - \theta(i)) + V_{r,c} - \frac{\lambda f_D(i)}{2} \right)^2$$ gelöst wird, wobei N die Anzahl von Impulsen oder von Gruppen von Impulsen ist, wobei die Winkelposition $\theta_c$ und die Radialgeschwindigkeit $V_{r,c}$ des Ziels als auf dem Horizont N konstant angenommen werden.

3.  Verfahren nach Anspruch 1, **dadurch gekennzeichnet, dass** die Radialgeschwindigkeit $V_{r,c}$ des Ziels auf einen gegebenen A-priori-Wert $V_{r,c}^{apriori}$ festgelegt wird, und dadurch, dass die Winkelposition $\theta_c(i)$ des Ziels als gleich

$$\theta_c(i) = \theta(i) + \frac{\lambda f_D(i) - V_{r,c}^{apriori}}{2 V_a \sin\theta(i)}$$ für jeden Impuls oder jede Gruppe von Impulsen mit einem Zeitindex i angenommen wird.

4.  Verfahren nach Anspruch 3, **dadurch gekennzeichnet, dass** die Winkelposition $\theta_c(i)$ des Ziels durch einen Messwertversatz $\delta\theta = \dfrac{\Delta V_{r,c}}{V_a \sin\theta}$ korrigiert wird, wobei $\Delta V_{r,c}$ die Abweichung zwischen dem A-priori-Wert $V_{r,c}^{apriori}$ der Radialgeschwindigkeit des Ziels und seinem Ist-Wert ist.

5.  Verfahren nach Anspruch 4, **dadurch gekennzeichnet, dass** der Messwertversatz $\delta\theta$ auf der Basis der Differenz zwischen den Mittelwerten der Winkelpositionen der Antenne und den Mittelwerten der Winkelpositionen des Ziels bestimmt wird.

6.  Verfahren nach Anspruch 4, **dadurch gekennzeichnet, dass** der Messwertversatz $\delta\theta$ auf der Basis eines Wertes der Radialgeschwindigkeit des Ziels bestimmt wird, geliefert (614) mit Mitteln (613) zum Verfolgen des Ziels.

7.  Verfahren nach einem der vorherigen Ansprüche, **dadurch gekennzeichnet, dass** die Winkelpositionen Peil- und Azimutwinkel sind.

8.  Verfahren nach einem der vorherigen Ansprüche, **dadurch gekennzeichnet, dass** der Träger (300) ein Luftfahrzeug ist.

9.  Verfahren nach einem der vorherigen Ansprüche, **dadurch gekennzeichnet, dass** die Radialgeschwindigkeit des Trägers (300) durch eine Trägheitseinheit an Bord des Trägers geschätzt wird.

10. Überwachungsradar (600), das wenigstens eine steuerbare Antenne (601), Mittel (603) zum Emittieren eines Radarsignals in Form von Impulsen, Mittel (604) zum Empfangen von durch die Reflexion der Impulse an der Umgebung erzeugten Echos, Mittel (615, 616) zum Schätzen der Winkelposition der Antenne, Mittel (606) zum Schätzen der Doppler-Frequenz der ein oder mehreren empfangenen Echos, Mittel (608) zum Paaren der Winkelposition der Antenne und der Doppler-Frequenz umfasst, wobei das Radar ferner zum Implementieren der Schritte des Verfahrens nach einem der Ansprüche 1 bis 9 ausgelegt ist.

**Claims**

1.  A method for estimating the angular position $\theta_c$ of a target (301) detected by a radar (600) on board a moving carrier (300), said radar emitting, by means of a steerable antenna (601), a signal in the form of pulses towards said target (301) and receiving echoes originating from the reflection of said signal on said target (301), said method comprising the following steps:

    o a step (615, 616) of estimating the angular position $\theta(i)$ of said antenna (601) for each pulse or group of pulses with a time index i taken in a set comprising a plurality of emitted pulses;
    o a step (606) of estimating the Doppler frequency $f_D(i)$ of the one or more echo(es) originating from the reflection of said pulse or said group of pulses on said target (301) for each pulse or group of pulses with a time index i taken in said set comprising a plurality of emitted pulses;
    o a step (608) of matching the angular position $\theta(i)$ and the Doppler frequency $f_D(i)$ for each pulse or group of pulses with a time index i taken in said set comprising a plurality of emitted pulses;
    o a step (611) of estimating the angular position $\theta_c$ of said target at least by resolving the equation:

$$\frac{\lambda f_D(i)}{2} = V_a \sin\theta(i)(\theta_c - \theta(i)) + V_{r,c}$$ where λ is the wavelength of the radar, $V_a$ is the norm of the speed of said carrier (300) and $V_{r,c}$ is the radial speed of said target (301).

2. The method according to claim 1, **characterised in that** the equation $\frac{\lambda f_D(i)}{2} = V_a \sin\theta(i)(\theta_c - \theta(i)) + V_{r,c}$ is resolved by minimising the mean square error $E(\theta_c, V_{r,c}) = \sum_{i=1}^{N} \left( V_a \sin\theta(i)(\theta_c - \theta(i)) + V_{r,c} - \frac{\lambda f_D(i)}{2} \right)^2$,

where N is the number of pulses or groups of pulses, the angular position $\theta_c$ and the radial speed $V_{r,c}$ of said target being assumed to be constant on the horizon N.

3. The method according to claim 1, **characterised in that** the radial speed $V_{r,c}$ of said target is set to a given a priori value $V_{r,c}^{apriori}$ and **in that** the angular position $\theta_c(i)$ of said target is taken as equal to $\theta_c(i) = \theta(i) + \frac{\lambda f_D(i) - V_{r,c}^{apriori}}{2V_a \sin\theta(i)}$ for each pulse or group of pulses with a time index i.

4. The method according to claim 3, **characterised in that** the angular position $\theta_c(i)$ of said target is corrected by a measurement bias $\delta\theta = \frac{\Delta V_{r,c}}{V_a \sin\theta}$, where $\Delta V_{r,c}$ is the deviation between the a priori value $V_{r,c}^{apriori}$ of the radial speed of said target and its actual value.

5. The method according to claim 4, **characterised in that** the measurement bias δθ is determined on the basis of the difference between the average values of the angular positions of said antenna and the average values of the angular positions of said target.

6. The method according to claim 4, **characterised in that** the measurement bias δθ is determined on the basis of a value of the radial speed of said target that is supplied (614) by means (613) for tracking said target.

7. The method according to any one of the preceding claims, **characterised in that** the angular positions are bearing or azimuth angles.

8. The method according to any one of the preceding claims, **characterised in that** said carrier (300) is an aircraft.

9. The method according to any one of the preceding claims, **characterised in that** the radial speed of said carrier (300) is estimated by an inertial unit on board said carrier.

10. A monitoring radar (600) comprising at least one steerable antenna (601), means (603) for emitting a radar signal in the form of pulses, means (604) for receiving echoes generated by the reflection of said pulses on the environment, means (615, 616) for estimating the angular position of said antenna, means (606) for estimating the Doppler frequency of the one or more received echoes, means (608) for matching the angular position of said antenna and the Doppler frequency, said radar being further adapted to implement the steps of the method according to any one of claims 1 to 9.

Amplitude du signal

Position de la cible     Azimut antenne

FIG.1

EP 2 455 778 B1

FIG.2

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4034373 A

- US 3713154 A

**Littérature non-brevet citée dans la description**

- **J.C.CURLANDER ; R.N. MCDONOUGY.** Synthetic Aperture Radar - Systems and Signal processing. John Wiley and Sons, 01 Janvier 1991